(19) Europäisches Patentamt / European Patent Office / Office européen des brevets

(11) **EP 4 668 390 A1**

(12) **EUROPEAN PATENT APPLICATION**

(43) Date of publication:
24.12.2025 Bulletin 2025/52

(21) Application number: 25175308.3

(22) Date of filing: **09.05.2025**

(51) International Patent Classification (IPC):
*H01M 10/04* (2006.01)    *H01M 50/124* (2021.01)
*H01M 50/209* (2021.01)    *H01M 50/211* (2021.01)
*H01M 50/242* (2021.01)    *H01M 50/249* (2021.01)
*H01M 50/262* (2021.01)    *H01M 50/291* (2021.01)

(52) Cooperative Patent Classification (CPC):
H01M 50/209; H01M 10/0481; H01M 50/124;
H01M 50/211; H01M 50/242; H01M 50/249;
H01M 50/262; H01M 50/291; H01M 2220/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: **19.06.2024 JP 2024099076**

(71) Applicant: **TOYOTA JIDOSHA KABUSHIKI KAISHA**
**Toyota-shi, Aichi-ken 471-8571 (JP)**

(72) Inventor: **TAKASE, Kohei**
**Toyota-shi, 471-8571 (JP)**

(74) Representative: **TBK**
**Bavariaring 4-6**
**80336 München (DE)**

(54) **BATTERY STACK, RECHARGEABLE BATTERY APPARATUS AND VEHICLE MOUNTING STRUCTURE**

(57)    The battery stack (40, 70, 80, 90, 110, 120) includes plural battery cells (50) disposed side by side in a first direction (W1), an electrode body (52) being accommodated in an exterior member (53) of each of the battery cells (50), and at least one inter-cell member (60, 72, 82, 92, 112) disposed between the adjacent battery cells (50). The exterior member (53) includes a low-stiffness region (53A), which is superposed with the electrode body (52) in the first direction (W1), and high-stiffness regions (53B) that are higher in stiffness than the low-stiffness region (53A). The high-stiffness regions (53B) are provided at end portion sides of the low-stiffness region (53A) in a second direction (W2) intersecting the first direction (W1). The inter-cell member (60, 72, 82, 92, 112) includes a first region (61, 73, 83, 93, 113) that touches the high-stiffness region (53B) and second regions (62, 74, 84, 94, 114) that touch the low-stiffness regions (53A).

FIG.4

EP 4 668 390 A1

## Description

BACKGROUND

Technical Field

The present disclosure relates to a battery stack, a rechargeable battery apparatus and a vehicle mounting structure.

Related Art

For example, Japanese Patent Application Laid-Open (JP-A) No. 2023-084066 recites a battery (a battery cell) in which a battery element is accommodated in an exterior part.

It is known that an electrode body of a battery cell expands and contracts in association with charging and discharging.

Accordingly, in a battery stack with a structure in which individual battery cells are stacked in one direction and the plural battery cells are electrically connected with one another, for example, inter-cell members that serve as buffering materials are disposed between adjacent pairs of the battery cells.

Generally, an inter-cell member is disposed at an exterior member of a battery cell to fit with positions that are superposed with the electrode body in the stacking direction. Ordinarily, the inter-cell member is not disposed at positions at the sides of end portions of the exterior member. That is, end portion sides of the exterior member are regions that are not restrained by contact with the inter-cell member.

In a process of fabricating a battery stack, during stacking of the battery cells, welding of terminal members and the like, external forces may be applied in certain directions to a stack body in which the battery cells and inter-cell members are stacked. Moreover, in a battery stack that is mounted to serve as a drive source for running of a vehicle, external forces may be applied to the stack body by vibrations during running and so forth. In these situations, stresses concentrate in regions of the exterior members with lower stiffness, and there is a risk of the battery cells deforming.

For example, the stiffness of a region of the exterior member of a battery cell that is superposed with the electrode body in the stacking direction is often relatively lower than the stiffness of a region at an end portion side, at which a terminal member or the like is connected. Consequently, stresses in the low-stiffness regions of the exterior members concentrate at boundaries with the high-stiffness regions of the exterior members, which are not restrained by the inter-cell members, and there is a risk of the battery cells deforming.

SUMMARY

The present disclosure provides a battery stack, a rechargeable battery apparatus and a vehicle mounting structure that may suppress deformation of battery cells when external forces are applied.

A battery stack according to a first aspect includes: plural battery cells disposed side by side in a first direction, an electrode body being accommodated in an exterior member of each of the battery cells; and at least one inter-cell member disposed between adjacent the battery cells. The exterior member includes: a low-stiffness region that is superposed with the electrode body in the first direction; and a high-stiffness region that is higher in stiffness than the low-stiffness region, the high-stiffness region being provided at a side of the low-stiffness region at which an end portion of the exterior member in a second direction is disposed, the second direction intersecting the first direction. The inter-cell member includes: a first region that touches the high-stiffness region; and a second region that touches the low-stiffness region.

The battery stack according to the first aspect is provided with the battery cells that are plurally arrayed in the first direction and the at least one inter-cell member disposed between the adjacent battery cells. The electrode bodies of the battery cells are accommodated in the exterior members. Each exterior member includes the low-stiffness region that is superposed with the electrode body in the first direction and the high-stiffness region, with higher stiffness than the low-stiffness region, that is provided relative to the low-stiffness portion at the side of the end portion of the second direction intersecting the first direction. Generally, an inter-cell member disposed between adjacent battery cells is disposed in correspondence with a low-stiffness region of an exterior member, which has greater displacement amounts caused by expansion and contraction of the electrode body, and is ordinarily not disposed at positions at the end portion sides of the exterior member. That is, the end portion sides of an exterior member are regions that are not restrained by contact with the inter-cell member. Consequently, when an external force is applied, stresses in the low-stiffness regions of the exterior members concentrate at boundaries with the high-stiffness regions that are not restrained by inter-cell members, and there is a risk of the battery cells deforming.

In the first aspect of the present disclosure, the inter-cell member includes the first region touching the high-stiffness region and the second region touching the low-stiffness region. Therefore, the region of the exterior member with higher stiffness, which is provided at the end portion side in the second direction, is in contact with the inter-cell member and is restrained. Consequently, shifting of the high-stiffness region of the exterior member when an external force is applied is suppressed, and a concentration of stress in the low-stiffness region of the exterior member at a boundary between the high-stiffness region and the low-stiffness region is moderated. As a result, deformation of the battery cells is suppressed.

In a battery stack according to a second aspect, in the structure according to the first aspect, the low-stiffness region is formed of a laminate film.

In the battery stack according to the second aspect, concentrations as described above of stress in the low-stiffness region structured by the laminate film are suppressed. Therefore, even though the laminate film is employed as the exterior member enclosing the electrode body, deformation of the battery cell may be suppressed. Moreover, because the low-stiffness region is structured by the laminate film, it is easy to assure electrical isolation of a terminal member connected to the electrode body. Consequently, a cross-sectional area of the terminal member or the like may be increased, and heat dissipation of the battery cell may be increased. As a result, a temperature rise of the battery cells caused by charging or discharging may be suppressed effectively.

In a battery stack according to a third aspect, in the structure according to the first aspect or the second aspect, a friction force between the high-stiffness region and the first region is greater than a friction force between the low-stiffness region and the second region.

The battery stack according to the third aspect is structured such that friction force at a contact region between the high-stiffness region of the exterior member and the first region of the inter-cell member is greater than friction force at a contact location between the low-stiffness region of the exterior member and the second region. Therefore, a restraining force on the high-stiffness region from the inter-cell member is relatively higher than a restraining force on the low-stiffness region, and deformation of the battery cell is suppressed effectively.

In a battery stack according to a fourth aspect, in the structure according to the third aspect, coefficients of friction of the inter-cell member are set such that a coefficient of friction of the first region is greater than a coefficient of friction of the second region.

In the battery stack according to the fourth aspect, the coefficient of friction of the first region of the inter-cell member is greater than the coefficient of friction of the second region of the inter-cell member. Therefore, friction force at the contact region between the high-stiffness region of the exterior member and the first region of the inter-cell member is greater than friction force at the contact region between the low-stiffness region and the second region.

In a battery stack according to a fifth aspect, in the structure according to the third aspect or the fourth aspect, thicknesses in the first direction of the inter-cell member are set such that a thickness of the first region is greater than a thickness of the second region.

In the battery stack according to the fifth aspect, the thickness in the first direction of the inter-cell member at the first region is greater than the thickness at the second region. Therefore, the high-stiffness region of the exterior member touches the inter-cell member with precedence over the low-stiffness region, and a normal force acting on the contact surface with the first region is relatively higher than a normal force acting on the contact surface with the second region. As a result, the friction force operating at the contact region between the high-stiffness region of the exterior member and the first region of the inter-cell member is greater than the friction force operating at the contact region between the low-stiffness region and the second region.

In a battery stack according to a sixth aspect, in the structure according to any one of the third to fifth aspects, Young's moduluses of the inter-cell member are set such that a Young's modulus of the first region is greater than a Young's modulus of the second region.

In the battery stack according to the sixth aspect, the Young's modulus of the first region of the inter-cell member is greater than the Young's modulus of the second region. Thus, the stiffness of the high-stiffness region of the exterior member is made higher than that of the low-stiffness region. As a result, a normal force received through the contact surface with the inter-cell member is relatively higher at the high-stiffness region. Therefore, the friction force at the contact region between the high-stiffness region of the exterior member and the first region of the inter-cell member is greater than the friction force at the contact region between the low-stiffness region of the exterior member and the second region.

In a battery stack according to a seventh aspect, in the structure according to the first aspect or the second aspect, the first region of the inter-cell member engages with the high-stiffness region.

In the battery stack according to the seventh aspect, the first region of the inter-cell member that touches the high-stiffness region of the exterior member is engaged with the high-stiffness region. Therefore, a restraining force on a cap portion from the inter-cell member is relatively raised, and deformation of the battery cell is suppressed effectively.

In a battery stack according to an eighth aspect, in the structure according to any one of the first to seventh aspects, the inter-cell member is a thermally insulating member.

In the battery stack according to the eighth aspect, thermal insulation between the battery cells may be realized by the inter-cell member. Therefore, at a time of abnormal heating of a battery cell, a chain of heating to other, neighboring battery cells may be suppressed.

In a battery stack according to a ninth aspect, in the structure according to any one of the first to eighth aspects, the inter-cell member includes a pair of the high-stiffness region, the high-stiffness regions opposing one another in the second direction intersecting the first direction.

In the battery stack according to the ninth aspect, each battery cell includes the pair of high-stiffness regions that oppose one another in the second direction intersecting the first direction. Therefore, shifting of the high-stiffness regions in the second direction in response to an external force applied to the battery stack in the second direction may be suppressed effectively.

In a battery stack according to a tenth aspect, in the structure according to the ninth aspect, the pair of high-stiffness regions include electrical conductivity.

In the battery stack according to the tenth aspect, the pair of high-stiffness regions provided at the exterior member are constituted with conductivity. Therefore, the high-stiffness regions may be employed as terminal members. Consequently, by structuring a high-stiffness region and a terminal member as a single component, a component count may be reduced.

In a battery stack according to an eleventh aspect, the structure according to any one of the first to tenth aspects further includes a pair of end plate portions that are disposed at an end portion at one side of the battery stack in the first direction and an end portion at another side of the battery stack in the first direction.

In the battery stack according to the eleventh aspect, the pair of end plate portions that are provided are disposed at the end portion at the one side of the battery stack in the first direction and the end portion at another side of the battery stack in the first direction. Therefore, a predetermined restraining force in the first direction may be applied to the stack body in which the battery cells and inter-cell members are stacked, restraint of the battery cells by the inter-cell members may be stable, and deformation of the battery cells may be suppressed effectively.

In a battery stack according to a twelfth aspect, the structure according to the eleventh aspect further includes a side plate portion disposed at least at one end portion of the battery stack in a direction orthogonal to the first direction, the side plate portion linking the pair of end plate portions in the first direction.

In the battery stack according to the twelfth aspect, the pair of end plate portions are linked in the first direction by the side plate portion. Therefore, the restraining force that is applied by the pair of end plate portions is more stable, and deformation of the battery cells is suppressed more effectively.

In a battery stack according to a thirteenth aspect, in the structure according to any one of the first to twelfth aspects, the electrode body includes a solid-state electrolyte.

In the battery stack according to the thirteenth aspect, the electrode body includes the solid state electrolyte. Thus, the battery cells are structured as a solid state battery. As a result, restraining forces applied to the stack body in which the battery cells and inter-cell members are stacked may be higher than for battery cells of a liquid-based battery. Therefore, compared to a battery stack that employs battery cells of a liquid-based battery, the restraining force on the battery cells in the first direction may be increased, and deformation of the battery cells may be suppressed effectively.

A rechargeable battery apparatus according to a fourteenth aspect includes: a battery stack according to any one of the first aspect to the thirteenth aspect; at least two longitudinal wall portions that are disposed side by side in the first direction and extend in the second direction; and a battery case between adjacent the longitudinal wall portions, the battery case accommodating the battery stack. An end portion of the battery stack at one side in the first direction and an end portion of the battery stack at another side in the first direction are fixed to the longitudinal wall portions directly or via other members.

In the rechargeable battery apparatus according to the fourteenth aspect, the battery stack is fixed inside the battery case via the two longitudinal wall portions that are adjacent in the first direction. This rechargeable battery apparatus may be employed in, for example, a vehicle with a Cell to Pack (CTP) structure in which a modularized battery case (battery pack) is assembled to a vehicle body. Thus, deformation of battery cells in a vehicle with a CTP structure may be suppressed.

A vehicle mounting structure according to a fifteenth aspect is a vehicle mounting structure for a battery stack according to any one of the first aspect to the thirteenth aspect, and includes a pair of framework portions that structure a framework of a vehicle lower portion, the framework portions being disposed side by side in the first direction and extending in the second direction. An end portion of the battery stack at one side in the first direction and an end portion of the battery stack at another side in the first direction are fixed to the framework portions directly or via other members.

In the vehicle mounting structure according to the fifteenth aspect, the battery stack is fixed via the two framework portions that are the vehicle lower portion framework and are adjacent in the first direction. This vehicle mounting structure may be employed in, for example, a vehicle with a Cell to Body (CTB) structure in which battery stacks are modularized and assembled with a body framework. Thus, deformation of battery cells in a vehicle with a CTB structure may be suppressed.

As described above, the battery stack, rechargeable battery apparatus and vehicle mounting structure according to the present disclosure may suppress deformation of battery cells when external forces are applied.

BRIEF DESCRIPTION OF THE DRAWINGS

Exemplary embodiments of the present invention will be described in detail based on the following figures, wherein:

Fig. 1 is a plan view schematically showing structures of a vehicle body lower portion of a vehicle in which a battery stack according to a first exemplary embodiment is mounted;
Fig. 2 is a sectional diagram of a vehicle lower portion schematically showing a state cut along line 2-2 in Fig. 1;
Fig. 3 is an exploded perspective view in which a rechargeable battery apparatus according to the first exemplary embodiment is partially exploded;

Fig. 4 is an exploded perspective view in which the battery stack according to the first exemplary embodiment is partially exploded;

Fig. 5 is a sectional diagram of a battery cell schematically showing a state cut along line 5-5 in Fig. 4;

Fig. 6A is a plan view schematically showing a state in a fabrication process of the battery stack, prior to restraining plural battery cells and inter-cell members in a stacking direction;

Fig. 6B is a plan view showing a partial magnification of a restrained state of the plural battery cells in the fabrication process of the battery stack;

Fig. 7A is a plan view schematically showing a step of welding busbars to the battery cells in the fabrication process of the battery stack;

Fig. 7B is a plan view showing a partial magnification of welding locations in the fabrication process of the battery stack;

Fig. 8A is a plan view schematically showing a first variant example of the battery stack, showing a partial magnification of a state prior to stacking of the battery cells and inter-cell members in a first direction;

Fig. 8B is a plan view schematically showing the first variant example of the battery stack, showing a partial magnification of a state subsequent to the stacking of the battery cells and inter-cell members;

Fig. 9A is a plan view schematically showing a second variant example of the battery stack, showing a partial magnification of a state prior to stacking of the battery cells and inter-cell members in the first direction;

Fig. 9B is a plan view schematically showing the second variant example of the battery stack, showing a partial magnification of a state subsequent to the stacking of the battery cells and inter-cell members;

Fig. 10A is a plan view schematically showing a third variant example of the battery stack, showing a partial magnification of a state prior to stacking of the battery cells and inter-cell members in the first direction;

Fig. 10B is a plan view schematically showing the third variant example of the battery stack, showing a partial magnification of a state subsequent to the stacking of the battery cells and inter-cell members;

Fig. 11A is a plan view schematically showing a fourth variant example of the battery stack, showing a partial magnification of a state prior to stacking of the battery cells and inter-cell members in the first direction;

Fig. 11B is a plan view schematically showing the fourth variant example of the battery stack, showing a partial magnification of a state subsequent to the stacking of the battery cells and inter-cell members;

Fig. 12 is an exploded perspective view showing a fifth variant example of the battery stack, in which the battery stack is partially exploded;

Fig. 13 is a plan view schematically showing structures of a vehicle body lower portion of a vehicle in which a battery stack according to a second exemplary embodiment is mounted;

Fig. 14 is a sectional diagram of a vehicle lower portion schematically showing a state cut along line 14-14 in Fig. 13; and

Fig. 15 is a plan view schematically showing a battery stack according to a comparative example, showing a state in which a battery cell is buckled by application of an external force.

DETAILED DESCRIPTION

= First Exemplary Embodiment =

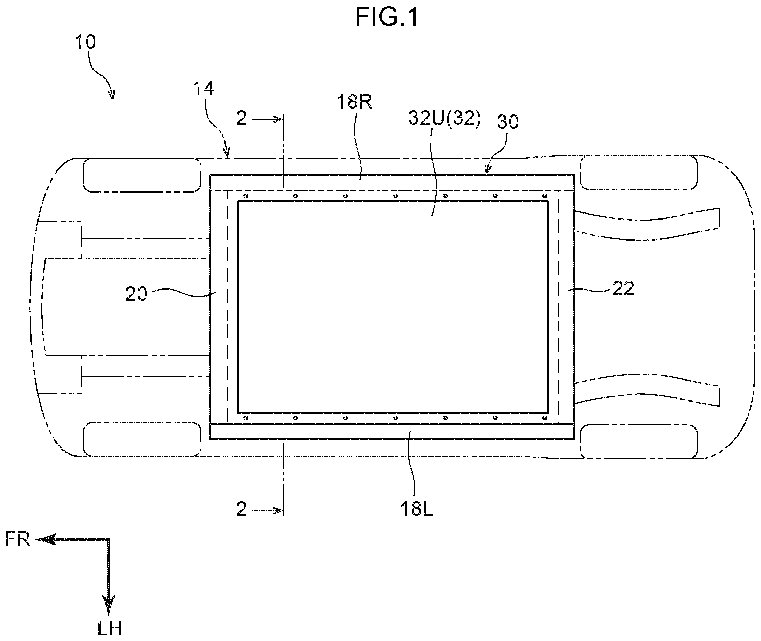

Below, a vehicle 10 according to a first exemplary embodiment is described with reference to Fig. 1 to Fig. 7. An arrow FR that is shown as appropriate in the drawings indicates a vehicle front side, an arrow UP indicates a vehicle upper side, and an arrow LH indicates a vehicle left side. In the following descriptions, where the directions front, rear, upper, lower, left and right are used without being particularly specified, the same represent the front and rear in the vehicle front-and-rear direction, upper and lower in the vehicle vertical direction, and left and right when facing in the forward progress direction.

In the present exemplary embodiment, a first direction of a battery stack 40, indicated by arrow W1, coincides with the vehicle width direction, and a second direction of the battery stack 40, indicated by arrow W2, coincides with the vehicle front-and-rear direction. A third direction of the battery stack 40, indicated by arrow W3, coincides with the vehicle vertical direction.

Unless particularly specified in this Description, each element is not limited to being a single element but may be plurally provided. In the drawings, the same reference symbol is assigned to elements that are substantially the same, and duplicative descriptions are omitted from the Description.

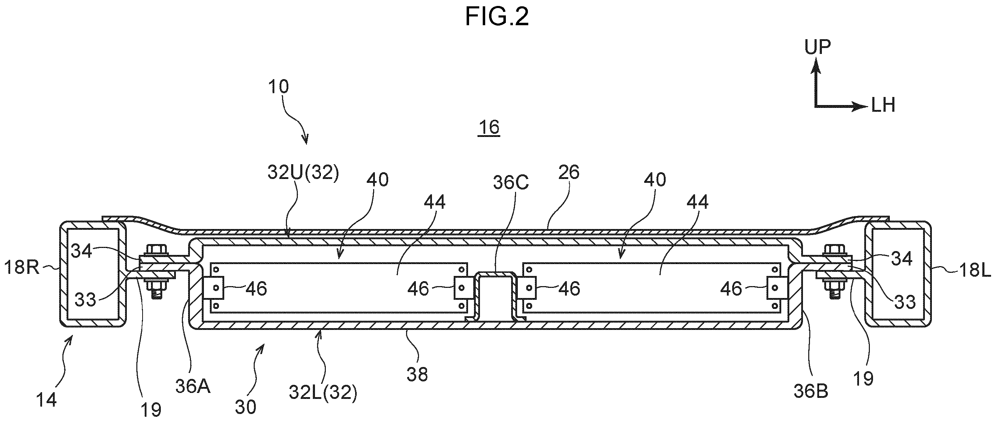

As shown in Fig. 1 and Fig. 2, the vehicle 10 according to the present exemplary embodiment is an electric car that runs using driving force of an electric motor, which is not shown in the drawings. The vehicle 10 is equipped with a vehicle body 14. The electric car may be, for example, a hybrid electric vehicle (HEV), a plug-in hybrid electric vehicle (PHEV), a battery electric vehicle (BEV), a fuel cell electric vehicle (FCEV) or the like.

A rechargeable battery apparatus 30 is mounted at a lower portion of the vehicle body 14. The rechargeable battery apparatus 30 supplies electric power for driving to the electric motor. The rechargeable battery apparatus 30 has a structure in which plural battery stacks 40 are accommodated inside a battery case 32. Firstly, structures of the lower portion of the vehicle body 14 are described. Then, structures of the rechargeable battery apparatus 30 and structures of each battery stack 40 that are principal portions of the present exemplary embodiment are described.

- Structure of vehicle lower portion -

The vehicle body 14 of the vehicle 10 is equipped with a left and right pair of rockers 18L and 18R, a front cross member 20 and a rear cross member 22. The left and right pair of rockers 18L and 18R extend in the vehicle front-and-rear direction at lower portions of both vehicle width direction sides of a vehicle cabin 16 (see Fig. 2). The front cross member 20 spans in the vehicle width direction between front end portions of the left and right pair of rockers 18L and 18R, and the rear cross member 22 spans in the vehicle width direction between rear end portions of the left and right pair of rockers 18L and 18R. The vehicle body 14 is further equipped with a floor pan 26 (see Fig. 2) that spans between upper portions of the left and right pair of rockers 18L and 18R and forms a floor of the vehicle cabin 16.

In the present exemplary embodiment, the left and right pair of rockers 18L and 18R structure a framework of the vehicle lower portion. The left and right pair of rockers 18L and 18R are an example of a pair of framework portions that are disposed side by side in the first direction W1 (the vehicle width direction) and extend in the second direction W2 (the vehicle front-and-rear direction). The front cross member 20 and the rear cross member 22 are an example of a pair of framework portions that extend in the first direction W1 and are disposed side by side in the second direction W2.

The left and right rockers 18L and 18R, the front cross member 20 and the rear cross member 22 are fabricated by extrusion molding of a light metal, for example, an aluminium alloy or the like. The left and right rockers 18L and 18R are formed in long, narrow shapes that are long in the vehicle front-and-rear direction. Cross sections of the left and right rockers 18L and 18R seen in the vehicle front-and-rear direction form substantially rectangular shapes. Support flange portions 19 are provided at side faces at the vehicle width direction inner sides of the left and right rockers 18L and 18R. The support flange portions 19 project to the vehicle width direction inner sides. The front cross member 20 and rear cross member 22 are formed in long, narrow shapes that are long in the vehicle width direction. Cross sections of the front cross member 20 and rear cross member 22 seen in the vehicle width direction form substantially rectangular shapes. Two length direction end portions of the front cross member 20 are joined to front end portions of the left and right pair of rockers 18L and 18R, and two length direction end portions of the rear cross member 22 are joined to rear end portions of the left and right pair of rockers 18L and 18R.

The floor pan 26 is fabricated by press-forming of a plate material formed of a light metal, for example, an aluminium alloy or the like. The floor pan 26 is formed in a board shape with a plate thickness direction in the vehicle vertical direction. Left and right edge portions of the floor pan 26 abut against upper face portions of the left and right pair of rockers 18L and 18R from the vehicle upper side. Front and rear edge portions of the floor pan 26 abut against upper face portions of the front cross member 20 and rear cross member 22 from the vehicle upper side.

The structures of the lower portion of the vehicle body 14 described above are an example and may be modified as appropriate. When the structural members of the lower portion of the vehicle body 14 are constituted by the same kind of light metal (for example, an aluminium alloy), as in the present exemplary embodiment, a method of joining the structural members may employ means such as, for example, spot welding, friction stir welding, riveting, bolt-fastening or the like. When the structural members that are joined to one another are formed of different kinds of material (for example, steel and an aluminium alloy), the joining method may employ means such as, for example, bolt-fastening, riveting or the like.

- Rechargeable battery apparatus -

The rechargeable battery apparatus 30 is disposed between the front cross member 20 and the rear cross member 22 in plan view. The rechargeable battery apparatus 30 is mounted in the vehicle 10, supported by each of the left and right pair of rockers 18L and 18R in the vehicle width direction. That is, the lower portion structure of the vehicle 10 is a Cell to Pack (CTP) structure in which a modularized battery case (battery pack) is assembled to the body.

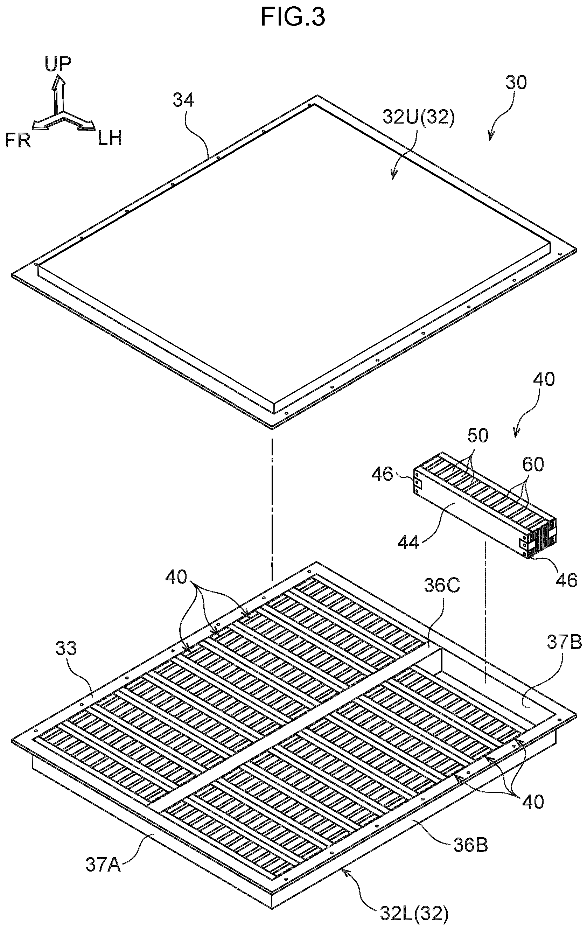

Fig. 3 is an exploded perspective view in which the rechargeable battery apparatus 30 is partially exploded. As shown in Fig. 3, the rechargeable battery apparatus 30 includes the battery case 32, with a flattened box shape, and a plural number of the battery stacks 40 accommodated inside the battery case 32. The battery case 32 is formed by superposing a lower case 32L and an upper case 32U from above and below.

The lower case 32L has, for example, a shallow bathtub shape that is open to the vehicle upper side. The lower case 32L includes flange portions 33 at edge portions in the vehicle width direction and the vehicle front-and-rear direction. The upper case 32U has, for example, a shallow bathtub shape that is open to the vehicle lower side. The upper case 32U includes flange portions 34 at edge portions in the vehicle width direction and the vehicle front-and-rear direction. The upper case 32U is disposed at the lower side of the floor pan 26 and is superposed with the lower case 32L from the vehicle upper side. In a state in which the flange portions 33 and 34 of the lower case 32L and upper case 32U are superposed in the vertical direction, the flange portions 33 and 34 are joined to one another. Vehicle width direction edge portions of the above-mentioned battery case 32 are abutted from the upper side against the support flange portions 19 provided at the left and right rockers 18L and 18R of the flange portions 33 and 34 that are superposed above and below, and these abutting regions are joined.

A joining method for these members may employ means such as, for example, spot welding, friction stir welding, riveting, bolt-fastening or the like. In the present exemplary embodiment, bolt-fastening means are employed.

A structure is applicable in which the flange portions 33 and 34 at the vehicle front side of the battery case 32 are joined to the front cross member 20, and a structure is applicable in which the flange portions 33 and 34 at the vehicle rear side of the battery case 32 are joined to the rear cross member 22.

The upper case 32U of the battery case 32 described above is not necessary. A structure is applicable in which the upper case 32U is omitted and the floor pan 26 serves as the upper case.

The lower case 32L includes longitudinal wall portions 36A, 36B and 36C that serve as framework portions extending in the vehicle front-and-rear direction and are provided standing to the upper side from a floor plate 38 of the lower case 32L. The longitudinal wall portions 36A and 36B are disposed at end portions at one side and the other side of the lower case 32L in the vehicle width direction. The longitudinal wall portion 36C is disposed at a central portion of the lower case 32L in the vehicle width direction. The lower case 32L further includes lateral wall portions 37A and 37B that serve as framework portions extending in the vehicle width direction and are provided standing to the upper side from the floor plate 38 of the lower case 32L. The lateral wall portion 37A is disposed at a front end portion of the lower case 32L and links between front end portions of the longitudinal wall portions 36A, 36B and 36C in the vehicle width direction. The lateral wall portion 37B is disposed at a rear end portion of the lower case 32L and links between rear end portions of the longitudinal wall portions 36A, 36B and 36C in the vehicle width direction.

The lower case 32L and upper case 32U described above are formed, for example, by press-forming of a metal plate material. The respective longitudinal wall portions 36A, 36B and 36C provided at the lower case 32L are an example of at least two longitudinal wall portions that are disposed side by side in the first direction W1 (the vehicle width direction) and extend in the second direction W2 (the vehicle front-and-rear direction). The respective lateral wall portions 37A and 37B provided at the lower case 32L are an example of at least two lateral wall portions that are disposed side by side in the second direction W2 and extend in the first direction W1.

- Battery stack -

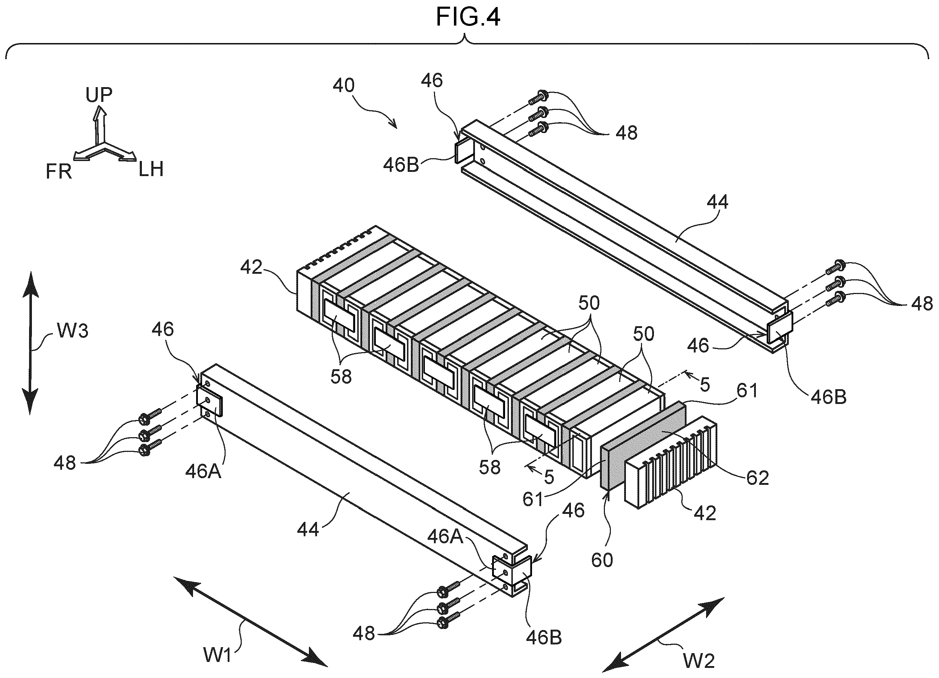

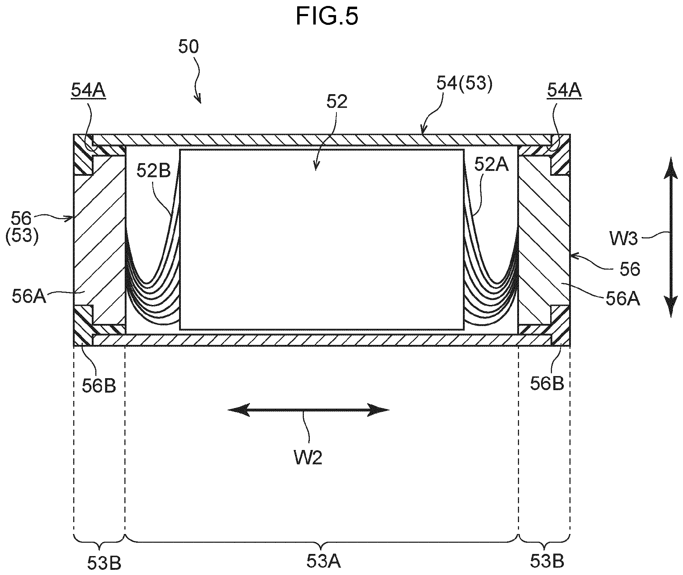

Below, details of each battery stack 40 are described. Fig. 4 is an exploded perspective view in which the battery stack is partially exploded. Fig. 5 is a sectional diagram of a battery cell 50, schematically showing a state cut along line 5-5 in Fig. 4.

Where the longitudinal wall portion 36A, longitudinal wall portion 36B and longitudinal wall portion 36C are not being specifically distinguished below, the single term "longitudinal wall portions 36" may be used. In the descriptions below, the first direction W1 indicates a stacking direction of the battery cells 50, and the second direction W2 indicates a direction intersecting the first direction W1. In the present exemplary embodiment, the second direction W2 is a direction orthogonal to the first direction W1, but this is not limiting.

Inside the lower case 32L, a plural number of the battery stacks 40 (see Fig. 3) are accommodated between the longitudinal wall portions 36 that are adjacent in the first direction W1 (the vehicle width direction). The plural battery stacks 40 are disposed side by side in the second direction W2 (the vehicle front-and-rear direction). One and other end portions of the battery stack 40 in the first direction W1 are fixed to the longitudinal wall portions 36 via brackets 46.

The battery stacks 40 include the battery cells 50, inter-cell members 60, end plates 42 and side plates 44.

- Battery cell -

A plural number of the battery cells 50 are disposed side by side in the first direction W1. Each battery cell 50 is, for example, a lithium-ion rechargeable battery and includes an exterior member 53 accommodating an electrode body 52. The exterior member 53 includes a case portion 54 that accommodates the electrode body 52 and a pair of cap portions 56. The cap portions 56 are provided at sides of the case portion 54 at which end portions in the second direction W2 are disposed. A stiffness of the pair of cap portions 56 of the battery cell 50 is specified to be greater than a stiffness of the case portion 54.

- Electrode body -

The electrode body 52 includes at least one stack body in which a positive current collector 52A, a positive active material layer, an electrolyte layer, a negative active material layer, a negative current collector 52B, a negative active material layer, an electrolyte layer and a positive active material layer are stacked in this order in the first direction W1.

The positive current collector 52A and negative current collector 52B are sheet-shaped metal films. Metals constituting the positive current collector 52A and negative current collector 52B are not particularly limited but, for example, Cu, Ni, Cr, Au, Pt, Ag, Al, Fe, Ti, Zn, Co, stainless steel and the like can be mentioned. Al is preferable for the metal constituting the positive current collector 52A, and Cu is preferable for the material constituting the negative current collector 52B. The positive current collector 52A and negative current collector 52B may each include current collector tabs. The current collector tabs may be constituted of the same materials as the respective current collectors. Thicknesses of the positive current collector 52A and the negative current collector 52B may be, for example, between 0.1 μm and 1 mm.

The positive active material layer is a sheet-shaped layer containing a positive active material. The positive active material is not particularly limited, but including a lithium composite oxide is preferable. The positive active material layer may also include a conductive auxiliary agent, a binder and the like. Conductive auxiliary agents that can be mentioned are, for example, carbon materials, metal materials and conductive polymer materials. Binders that can be mentioned are, for example, vinyl halide resins, rubbers, polyolefins and so forth. The thickness of the positive active material layer may be, for example, between 0.1 μm and 1 mm.

The negative active material layer is a sheet-shaped layer containing a negative active material. The negative active material is not particularly limited but, for example, lithium-based active materials such as metallic lithium and the like, carbon-based active materials such as graphite and the like, oxide-based active materials such as lithium titanate and the like, and silicon-based active materials such as simple silicon and the like can be mentioned. The negative active material layer may also include a conductive auxiliary agent, a binder and the like, similar to those exemplified as a conductive auxiliary agent and binder contained in the positive active material layer. The thickness of the negative active material layer may be, for example, between 0.1 μm and 1 mm.

The electrolyte layer contains a solid-state electrolyte. In other words, the battery cell 50 according to the present exemplary embodiment is a solid-state battery. As the solid-state electrolyte, including at least one selected from the group consisting of solid-state sulfide electrolytes, solid-state oxide electrolytes and solid-state halide electrolytes is preferable. The solid-state electrolyte may contain an electrolyte liquid up to 10% by mass of the total electrolyte mass. The solid-state electrolyte may be a compound solid-state electrolyte containing an inorganic solid-state electrolyte and a polymer electrolyte. The thickness of the electrolyte layer may be, for example, between 0.1 μm and 1 mm.

- Exterior member -

The exterior member 53 includes the case portion 54 and the cap portions 56, which are provided in correspondence with aperture portions 54A of the case portion 54.

The case portion 54 is disposed so as to enclose the board-shaped electrode body 52. For example, the case portion 54 is formed in a tube shape whose axial direction is in the second direction W2 and includes the aperture portions 54A at one side and the other side in the second direction W2.

The case portion 54 may be structured of a laminate film, a film fabricated of metal, a thin plate fabricated of metal or the like. In the present exemplary embodiment, the case portion 54 is structured of a laminate film. The meaning of the term laminate film as used here includes a film-shaped multilayer body in which multiple film-shaped layers are arranged, with a resin layer (for example, polypropylene, nylon, PET or the like) disposed at a surface of a metal layer. A thickness of the materials of the case portion 54 may be, for example, between 0.15 mm and 0.3 mm.

The cap portions 56 are provided in correspondence with the aperture portions 54A of the case portion 54. Thus, the battery cell 50 according to the present exemplary embodiment includes a pair of the cap portions 56 opposing one another in the second direction W2.

Each cap portion 56 features electrical conductivity and structures a terminal member that is electrically connected to the electrode body 52. The cap portion 56 includes a terminal portion 56A that is conductive and a resin portion 56B that is not conductive. The terminal portion 56A is a plate-shaped member whose thickness direction is in the second direction W2. The terminal portion 56A is inserted through the aperture portion 54A to the interior of the case portion 54. An inner side surface of the terminal portion 56A that is disposed inside the case portion 54 is electrically connected to a current collector (the positive current collector 52A or the negative current collector 52B). An outer side surface of the terminal portion 56A that is disposed outside the case portion 54 is electrically connected to a busbar 58.

A method for connecting the terminal portion 56A to the current collector or connecting the terminal portion 56A to the busbar 58 may employ means such as laser welding, spot welding, riveting, bolt-fastening or the like. In the present exemplary embodiment, these members are connected by laser welding. The current collector (the positive current collector 52A or negative current collector 52B) may be connected to the terminal portion 56A via a current collector tab, and may be connected to the terminal portion 56A without going through a current collector tab.

A material of the terminal portion 56A is, for example, a metal; for example, Cu, Ni, Cr, Au, Pt, Ag, Al, Fe, Ti, Zn, Co, stainless steel and the like can be mentioned. A metal constituting the terminal portion 56A may be the same as a metal constituting the current collector (the positive current collector 52A or negative current collector 52B) and may be different, but using the same metal is preferable.

The resin portion 56B of the cap portion 56 is disposed between the case portion 54 and the terminal portion 56A to serve as an insulating member. The case portion 54 and each terminal portion 56A and resin portion 56B may be integrally molded by, for example, extrusion molding. When the case portion 54 is formed as a laminate film, the terminal portion 56A and resin portion 56B are integrally molded, and the case portion 54 and resin portion 56B may be heat-welded together. Further, when the case portion 54 is formed as a laminate film, the resin portion 56B may be omitted and the case portion 54 and terminal portion 56A may be heat-welded together.

As described above, the battery cell 50 according to the present exemplary embodiment is structured with the exterior member 53 accommodating the electrode body 52, and the metal plate-shaped cap portions 56 being connected to the case portion 54 constituted by the laminate film. Accordingly, as illustrated in Fig. 5, a region of the case portion 54 that overlaps with the electrode body 52 in the first direction W1 serves as a low-stiffness region 53A with a stiffness that is relatively low among regions of the exterior member 53, and the cap portions 56 serve as high-stiffness regions 53B with higher stiffness than the low-stiffness region 53A.

The meaning of the term "higher stiffness" as used herein may encompass, in a situation in which strength of the material of the exterior member is relatively strong, for example, a structure in which a Young's modulus of the high-stiffness region is higher than a Young's modulus of the low-stiffness region and thus the stiffness is higher. The meaning of the term "higher stiffness" may also encompass, in a situation in which a geometrical moment of inertia of the material of the exterior member is relatively large, for example, a structure in which a thickness of the high-stiffness region is greater than a thickness of the low-stiffness region, and thus the geometrical moment of inertia is relatively larger and the stiffness is higher.

- Inter-cell member -

Each inter-cell member 60 is disposed between two of the battery cells 50 that are adjacent in the first direction W1. The inter-cell member 60 includes first regions 61 and a second region 62. The inter-cell members 60 constitute buffer members that absorb expansion and contraction of the battery cells 50 during charging and discharging.

The first regions 61 touch the cap portions 56 of the two battery cells 50 disposed at the one side and the other side in the first direction W1 relative to the inter-cell member 60. Thus, each first region 61 braces the two cap portions 56 that are adjacent in the first direction W1. The second region 62 touches the case portions 54 of the two battery cells 50 that are adjacent to the one side and other side in the first direction W1 relative to the inter-cell member 60. Thus, the second region 62 braces the two case portions 54 that are adjacent in the first direction W1.

Because the inter-cell member 60 is provided with the first regions 61, the inter-cell member 60 touches the cap portions 56 (the high-stiffness regions 53B) via the first regions 61, forming a structure that is capable of restraining the cap portions 56 that have higher stiffness than the case portions 54. Therefore, when an external force acts on the stack body of the battery cells 50 and inter-cell members 60, shifting of the cap portions 56 is suppressed. When shifting of the cap portions 56 is suppressed in this way, concentrations of stress at the case portions 54 with lower stiffness (the low-stiffness regions 53A) when an external force is applied are moderated, and deformation of the battery cells 50 due to buckling of the case portions 54 at boundary regions with the cap portions 56 is suppressed.

In order to suppress shifting of the cap portions 56 effectively, in the present exemplary embodiment a predetermined surface treatment is applied to the inter-cell members 60 such that friction forces against the adjacent battery cells 50 differ between the first regions 61 and the second regions 62.

To describe this in more concrete terms, the friction force referred to here is a static friction force F (Newtons), which is represented by the following expression (1). In expression (1), $\mu$ represents a coefficient of static friction and N (Newtons) represents the magnitude of normal force.

Expression (1):          $F = \mu N \ (N)$

The friction force represented by expression (1) occurs in contact regions between the inter-cell members 60 and the adjacent battery cells 50. The inter-cell members 60 are restrained in the first direction W1 both by the adjacent battery cells 50 and by the end plates 42, which are described below. Consequently, normal forces corresponding to a restraint pressure occur at opposing faces of the inter-cell members 60 that oppose the battery cells 50 in the first direction W1.

In the present exemplary embodiment, thicknesses of each inter-cell member 60 in the second direction W2 are set to the same value at the first regions 61 and the second region 62. Therefore, the first regions 61 and the second region 62 are restrained with substantially the same restraint pressure.

In the present exemplary embodiment, a surface roughening treatment is applied to opposing faces of the first regions 61 of each inter-cell member 60 that oppose the battery cells 50. Consequently, coefficients of friction of the surface of the inter-cell member 60 at the opposing faces are set so as to be greater at the first regions 61 than at the second region 62. Thus, a structure is formed such that that friction force between each cap portion 56 and the first region 61 is greater than friction force between each case portion 54 and the second region 62. As a result, shifting of the cap portions 56 of the stack body in which the battery cells 50 and inter-cell members 60 are stacked is suppressed effectively.

Materials of the inter-cell members 60 described above are not particularly limited. Publically known materials such as resins, silicone, urethane, metals and the like may be selected as appropriate. The inter-cell members 60 may be constituted by one of these materials, and may be constituted by a combination of two or more materials. With a view to preventing short circuits between the battery cells 50, it is preferable if the inter-cell members 60 are electrical insulators.

The materials of the inter-cell members 60 are preferably resilient with a view to absorbing dimensional tolerances of the battery cells 50 and the inter-cell members 60, reducing variations in restraint pressure caused by thermal expansion and contraction of the battery cells 50 and the like, and so forth. Silicone and the like can be mentioned as examples for resilient bodies in this exemplary embodiment.

The material of the inter-cell member 60 is preferably excellent in thermal insulation, with a view to insulating between the adjacent battery cells 50. As insulating members that are excellent in thermal insulation, for example, urethane, silicone foam and the like can be mentioned. A silicone foam that provides the functions of a resilient body and an insulating member is more preferable. The inter-cell members 60 according to the present exemplary embodiment are formed of silicone foam.

Each inter-cell member 60 may be formed with a multilayer structure by combining two or more members. For example, the inter-cell member 60 may be formed with a two-layer structure of an electrical insulation layer and a thermal insulation layer.

A surface roughening treatment may be applied both to the first regions 61 of the inter-cell members 60 and to the cap portions 56 of the battery cells 50, or a surface roughening treatment may be applied only to the cap portions 56. If, according to the selection of materials, surface coefficients of friction of the inter-cell members 60 are sufficiently large, a surface smoothing treatment may be applied to the surfaces of the second regions 62.

- End plates -

The end plates 42 are disposed as a pair at the stack body in which the battery cells 50 and inter-cell members 60 are stacked, at an end portion at one side in the first direction W1 and at an end portion at another side of the battery stack in the first direction W1. The pair of end plates 42 restrain the stack body from both sides in the first direction W1 and apply a predetermined restraint pressure to the stack body in the first direction W1.

The pair of end plates 42 are plate bodies with substantially rectangular shapes whose thickness directions are in the first direction W1. The end plates 42 are formed of, for example, a resin or metal.

- Side plates -

The side plates 44 are disposed as a pair at the stack body in which the battery cells 50 and inter-cell members 60 are stacked, at an end portion at one side in the second direction W2 that is orthogonal to the first direction W1 and at an end portion at another side of the battery stack in the second direction W2. The pair of side plates 44 are members that link between the pair of end plates 42 in the first direction W1 and stabilize the restraint pressure applied to the battery cells 50 and inter-cell members 60.

The pair of side plates 44 are formed in plate shapes that are long in the first direction W1, and are formed of a resin or metal. The shape of each side plate 44 as seen in the first direction W1 is a substantial "U" shape that opens to the side thereof at which the stack body is disposed. Thus, faces of the stack body at both sides in the second direction W2 and portions of an upper face and a lower face are covered from the outside by the pair of side plates 44.

The pair of side plates 44 are fixed to the pair of end plates 42 using bolts 48. The bolts 48 are inserted into bolt insertion holes (not assigned reference symbols) provided at the one and other end portions in the first direction W1 of the pair of side plates 44, and are screwed into threaded holes (not assigned reference symbols) formed in side faces of the pair of end plates 42. Thus, the pair of end plates 42 are linked in the first direction W1 by the pair of side plates 44.

The pair of side plates 44 are also fixed to the battery case 32 via the plural brackets 46, which serve as other members. For example, each bracket 46 is structured as an L-shaped bracket including a first main face 46A that faces in the first direction W1 and a second main face 46B that faces in the second direction W2. Each first main face 46A is fixed to both the side plate 44 and an end portion in the first direction W1 of the battery stack 40, using the bolts 48. The second main face 46B is fixed to one of the longitudinal wall portions 36 of the lower case 32L by a method such as bolt-fastening, welding or the like. Thus, an end portion of the battery stack 40 at the one side in the first direction W1 and an end portion at another side of the battery stack in the first direction W1 are fixed to the longitudinal wall portions 36 of the lower case 32L via the brackets 46.

Structures are applicable in which brackets are formed integrally with one or both of the end plates 42 and the side plates 44, in which cases the end portion of the battery stack 40 at the one side in the first direction W1 and the end portion at another side of the battery stack in the first direction W1 are fixed directly to the longitudinal wall portions 36 of the lower case 32L.

The battery stack 40 described above is formed overall in a long, narrow cuboid shape that is long in the first direction W1 (the vehicle width direction). In this battery stack 40, the cap portions 56 at the positive sides of adjacent battery cells 50 or the cap portions 56 at the negative sides of adjacent battery cells 50 are connected to one another via the busbars 58, which are conductive members (see Fig. 4). Structures of the battery stack 40 are not limited by the above descriptions and may be modified as appropriate. For example, a structure may be formed in which one or both of the end plates 42 and the side plates 44 are omitted.

- Battery stack fabrication process -

The battery stack 40 described above is fabricated by, for example, a process including the first to fourth steps described below.

- First step -

The first step is a step (not shown in the drawings) of alternatingly stacking the battery cells 50 and inter-cell members 60 in the first direction W1 to obtain the stack body.

- Second step -

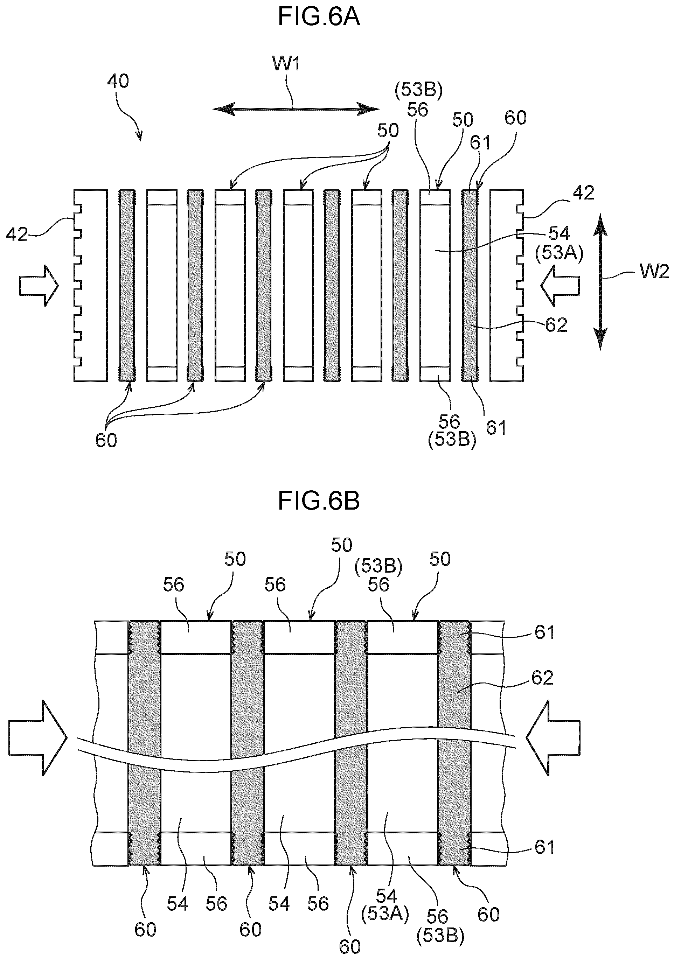

The second step is a step of restraining the stack body, in which the battery cells 50 and inter-cell members 60 are stacked, in the first direction W1 with the pair of end plates 42 (see Fig. 6A). In this step, although an external force (restraining force) in the first direction W1 is applied to the battery cells 50, shifting of the cap portions 56 of the battery cells 50 in the first direction W1 is suppressed by bracing from the first regions 61 of the inter-cell members 60 (see Fig. 6B).

- Third step -

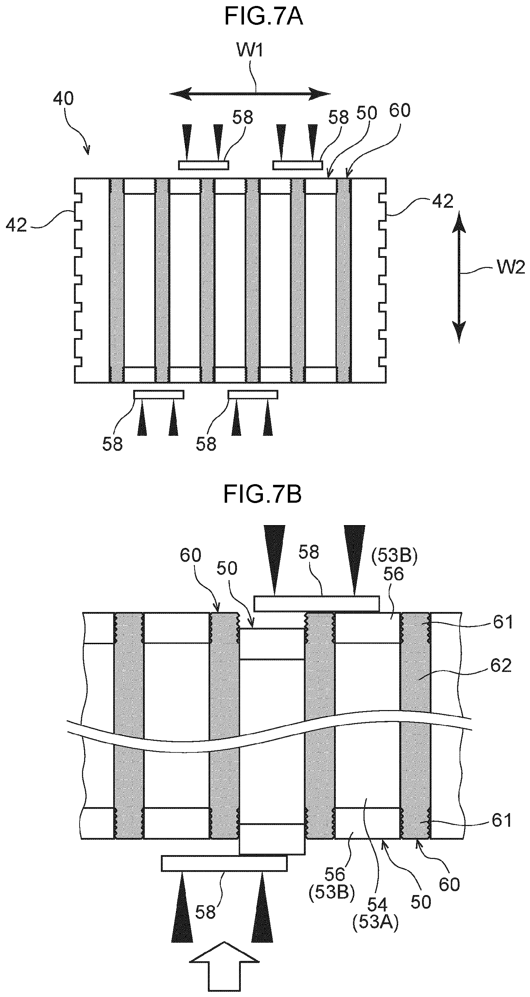

The third step is a step of welding the busbars 58 to the side faces of the stack body facing in the second direction W2 (see Fig. 7A). In this step, the cap portions 56 at the positive sides of the battery cells 50 that are adjacent in the first direction W1 or the cap portions 56 at the negative sides are electrically connected via the busbars 58. In order to reduce gaps between the busbars 58 and the cap portions 56 in this step, the welding is performed with the busbars 58 being pressed against the cap portions 56. Therefore, in this step an external force (restraining force) in the second direction W2 is applied to the battery cells 50, but shifting of the cap portions 56 of the battery cells 50 in the second direction W2 is suppressed by bracing from the first regions 61 of the inter-cell members 60 (see Fig. 7B).

- Fourth step -

The fourth step is a step (not shown in the drawings) of fixing the pair of side plates 44 to the stack body in which the battery cells 50, the inter-cell members 60 and the pair of end plates 42 are stacked. In this step, the pair of end plates 42 are linked in the first direction W1 by the pair of side plates 44. In this condition, the busbars 58 that are disposed to face in the second direction W2 are covered by the side plates 44. Hence, active portions of the battery cells 50 are protected by the side plates 44.

Each side plate 44 may have a structure that is provided with slots or aperture portions for exposing welding portions of the busbars 58. With this structure, welding of the busbars 58 may be performed through the slots or aperture portions after the side plate 44 has been arranged. Accordingly, the third step may be carried out subsequent to the fourth step.

- Operation and Effects -

Now, operation and effects of the first exemplary embodiment are described.

The battery stack 40 according to the first exemplary embodiment is provided with the battery cells 50 that are plurally disposed side by side in the first direction W1 and the at least one inter-cell member 60 disposed between the adjacent battery cells 50. The electrode body 52 of each battery cell 50 is accommodated in the exterior member 53. The exterior member 53 includes the low-stiffness region 53A (the case portion 54) that is superposed with the electrode body 52 in the first direction W1, and the high-stiffness regions 53B (the cap portions 56) that are higher in stiffness than the low-stiffness region 53A and are provided at the sides of the low-stiffness region 53A at which the end portions in the second direction W2 intersecting the first direction W1 are disposed.

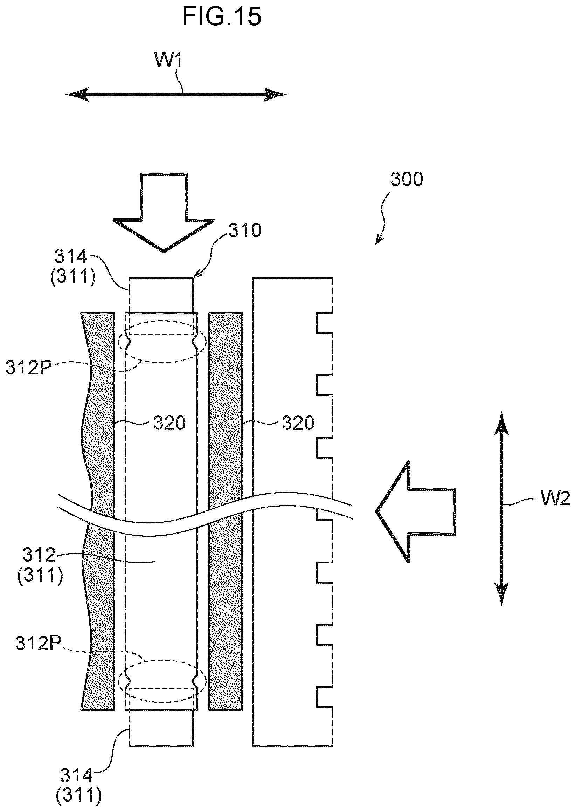

In this structure, expansion and contraction of the battery cells during charging and discharging are caused by expansion and contraction of the electrode bodies accommodated in the battery cells. Accordingly, the inter-cell members are disposed between the battery cells. Generally, inter-cell members are disposed in correspondence with low-stiffness regions of exterior members, displacement amounts of which due to the expansion and contraction of electrode bodies are greater. Ordinarily, the inter-cell members are not disposed at positions at the sides of end portions (high-stiffness regions) of the exterior members. That is, in a battery stack 300 according to a comparative example illustrated in Fig. 15, an inter-cell member 320 disposed between battery cells 310 is disposed only at positions touching a case portion 312 (a low-stiffness region) of an exterior member 311 of each battery cell 310 and is not disposed at positions touching cap portions 314 (high-stiffness regions) of the battery cell 310. Therefore, the sides of end portions of the exterior member 311 are locations that are not restrained by contact with the inter-cell member 320. Consequently, when an external force is applied, stresses in the case portion 312 concentrate at boundaries with the cap portions 314 that are not restrained by the inter-cell member 320, and there is a risk of the battery cells 310 deforming.

By contrast, the inter-cell member 60 according to the present exemplary embodiment includes the first regions 61 that touch the high-stiffness regions 53B of each exterior member 53 and the second region 62 that touches the low-stiffness region 53A. Therefore, the regions with higher stiffness provided at the sides of the end portions in the second direction W2 of the exterior member 53 are in contact with the inter-cell member 60 and are restrained. Consequently, when an external force is applied, shifting of the high-stiffness regions 53B is suppressed, and concentrations of stresses in the case portion 54 at boundaries between the case portion 54 and the cap portions 56 of the exterior member 53 are moderated. Therefore, deformation of the battery cells 50 is suppressed.

Thus, even when the case portion 54 of the exterior member 53 is constituted by a laminate film with low stiffness as in the present exemplary embodiment, deformation of the battery cells 50 may be suppressed. Moreover, because the case portion 54 is constituted by the laminate film, assuring electrical insulation between the terminal portions 56A of the cap portions 56 connected to the electrode body 52 is made easy. As a result, a cross-sectional area of the terminal portion 56A and suchlike may be increased, and heat dissipation of the battery cell 50 may be increased. Therefore, this structure may effectively suppress rises in temperature of the battery cells 50 caused by charging and discharging.

In the present exemplary embodiment, the coefficients of friction of the inter-cell member 60 are specified so as to be greater at the first regions 61 than at the second region 62. Therefore, friction forces at the contact regions between the cap portions 56 of the exterior member 53 and the first regions 61 of the inter-cell member 60 are greater than friction force at the contact region between the case portion 54 and the second region 62. Therefore, restraining forces on the cap portions 56 from the inter-cell member 60 are relatively higher than a restraining force on the case portion 54, and deformation of the battery cells 50 is suppressed effectively.

In the present exemplary embodiment, each inter-cell member 60 is constituted by a thermally insulating member. Therefore, the inter-cell member 60 realizes insulation between the battery cells 50. Therefore, at a time of abnormal heating of one of the battery cells 50, a chain of heating to other, neighboring battery cells 50 may be suppressed.

In the present exemplary embodiment, each battery cell 50 includes the pair of cap portions 56 that oppose one another in the second direction W2 orthogonal to the first direction W1. Therefore, shifting of the cap portions 56 in the second direction W2 in response to an external force applied to the battery stack 40 in the second direction W2 may be suppressed effectively. Thus, for example, in the fabrication step of welding the busbars 58 to the battery cells 50, deformation of the battery cells 50 by external forces that are applied when the busbars 58 are pressed thereagainst may be suppressed.

In the present exemplary embodiment, the pair of high-stiffness regions 53B (the cap portions 56) provided at each exterior member 53 are constituted to be conductive. Therefore, the high-stiffness regions 53B may be employed as terminal members. Consequently, by structuring each high-stiffness region 53B and terminal member of the exterior member 53 as a single component, the component count may be reduced.

In the present exemplary embodiment, the pair of end plates 42 that are provided are disposed at the end portion at the one side of the battery stack 40 in the first direction W1 and the end portion at another side of the battery stack in the first direction W1. Therefore, a predetermined restraining force in the first direction W1 may be applied to the stack body in which the battery cells 50 and inter-cell members 60 are stacked, restraint of the battery cells 50 by the inter-cell members 60 may be stable, and deformation of the battery cells 50 may be suppressed effectively.

In the present exemplary embodiment, because the pair of end plates 42 are linked in the first direction W1 by the side plates 44, the restraint pressure applied by the pair of end plates 42 may be made more stable, and deformation of the battery cells 50 may be suppressed effectively.

The electrode body 52 of each battery cell 50 is constituted with a solid-state electrolyte, and the battery cell 50 is structured as a solid state battery. Consequently, a restraint pressure applied to the stack body in which the battery cells 50 and inter-cell members 60 are stacked may be higher than for battery cells of a liquid-based battery. Therefore, compared to a battery stack that employs battery cells of a liquid-based battery, the restraining force on the battery cells 50 in the first direction W1 may be increased, and deformation of the battery cells 50 may be suppressed effectively.

In the rechargeable battery apparatus 30 equipped with the battery stack 40 described above, the battery stack 40 is fixed inside the lower case 32L (the battery case 32) via the two longitudinal wall portions 36 that are adjacent in the first direction W1. Thus, the rechargeable battery apparatus 30 may be employed in a vehicle with a Cell to Pack (CTP) structure. Therefore, in the vehicle 10 with this CTP structure, deformation of the battery cells 50 by external forces such as vibrations transmitted through the battery case 32 from the vehicle body 14 during running and the like may be suppressed.

Below, variant examples that may be employed in the exemplary embodiment above are described. Structural portions that are the same as in the first exemplary embodiment described above are assigned the same reference symbols and descriptions thereof are not given.

- First variant example -

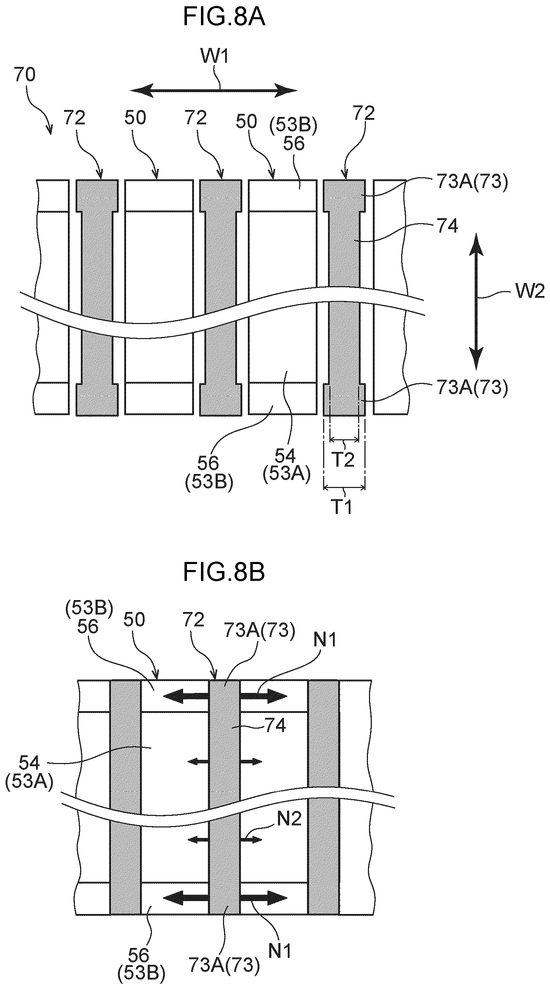

Below, a battery stack 70 according to a first variant example is described with reference to Fig. 8A and Fig. 8B. Fig. 8A is a plan view showing a partial magnification of a state prior to stacking of the battery cells 50 with inter-cell members 72 in the first direction W1. Fig. 8B is a plan view showing a partial magnification of a state subsequent to the stacking of the battery cells 50 and the inter-cell members 72.

As shown in Fig. 8A, each inter-cell member 72 includes, between the battery cells 50 that are adjacent, first regions 73 that touch the cap portions 56 (the high-stiffness regions 53B) and a second region 74 that touches the case portion 54 (the low-stiffness region 53A). In this first variant example, protruding portions 73A are provided at the first regions 73 of the inter-cell member 72. Each protruding portion 73A protrudes to both sides in the first direction W1 relative to the second region 74 touching the case portions 54 of the battery cells 50. Thus, a structure is formed in which thicknesses of the inter-cell member 72 in the first direction W1 are specified such that thicknesses T1 of the first regions 73 are greater than a thickness T2 of the second region 74. Other structures are similar to the structures of the first exemplary embodiment described above.

According to the structure described above, when the battery cells 50 and the inter-cell members 72 are being restrained in the first direction W1 and stacked, each cap portion 56 (high-stiffness region 53B) of the battery cells 50 touches the corresponding inter-cell members 72 in advance of the case portion 54 (the low-stiffness region 53A). Therefore, a normal force N1 acting on each contact surface of the first regions 73 is relatively higher than a normal force N2 acting on each contact surface of the second region 74. Thus, a structure may be formed such that a friction force operating at the contact region between the cap portion 56 of the exterior member 53 and the first region 73 of the inter-cell member 72 is greater than a friction force at the contact region between the case portion 54 and the second region 74. Therefore, the battery stack 70 according to the first variant example may provide the same operation and effects as the battery stack 40 according to the first exemplary embodiment described above.

In the present exemplary embodiment, the inter-cell member 72 is constituted as a resilient body. Consequently, as illustrated in Fig. 8B, each protruding portion 73A of the first regions 73 is resiliently deformed and crushed by the restraint pressure at the time of stacking. Thus, dimensional tolerances of the battery cells 50 and the inter-cell members 72 may be absorbed. In addition, restraint pressures caused by thermal expansion and contraction of the battery cells 50 and the like may be reduced. However, the inter-cell members 72 of the first variant example are not necessarily constituted as resilient bodies.

- Second Variant Example -

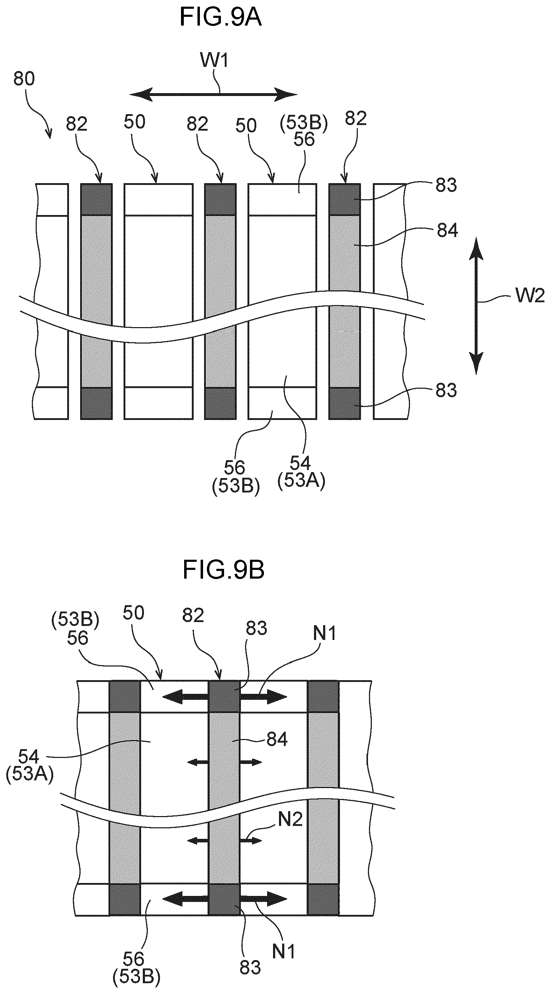

Below, a battery stack 80 according to a second variant example is described with reference to Fig. 9A and Fig. 9B. Fig. 9A is a plan view showing a partial magnification of a state prior to stacking of the battery cells 50 with inter-cell members 82 in the first direction W1. Fig. 9B is a plan view showing a partial magnification of a state subsequent to the stacking of the battery cells 50 and the inter-cell members 82.

As shown in Fig. 9A, each inter-cell member 82 includes, between the battery cells 50 that are adjacent, first regions 83 that touch the cap portions 56 (the high-stiffness regions 53B) and a second region 84 that touches the case portion 54 (the low-stiffness region 53A). In the second variant example, Young's moduluses of the inter-cell member 82 are specified such that each first region 83 has a greater Young's modulus than the second region 84. Other structures are similar to the structures of the first exemplary embodiment described above.

The inter-cell member 82 may, for example, be formed of different materials at the first regions 83 and the second region 84, thus making the Young's modulus of the first regions 83 different from the Young's modulus of the second region 84. As a further example, the first regions 83 and second region 84 may be formed of the same material and the Young's modulus of the first regions 83 may be made different from the Young's modulus of the second region 84 by the first regions 83 being formed to be non-porous and the second region 84 being formed to be porous.

According to the structure described above, when the battery cells 50 and the inter-cell members 82 are being restrained and stacked, as illustrated in Fig. 9B, a normal force N1 acting on each contact surface of the first regions 83 is relatively higher than a normal force N2 acting on each contact surface of the second region 84. Thus, a structure may be formed such that a friction force operating at the contact region between the cap portion 56 of the battery cell 50 and the first region 83 of the inter-cell member 82 is greater than a friction force at the contact region between the case portion 54 and the second region 84. Therefore, the battery stack 80 according to the second variant example may provide the same operation and effects as the battery stack 40 according to the first exemplary embodiment described above.

- Third Variant Example -

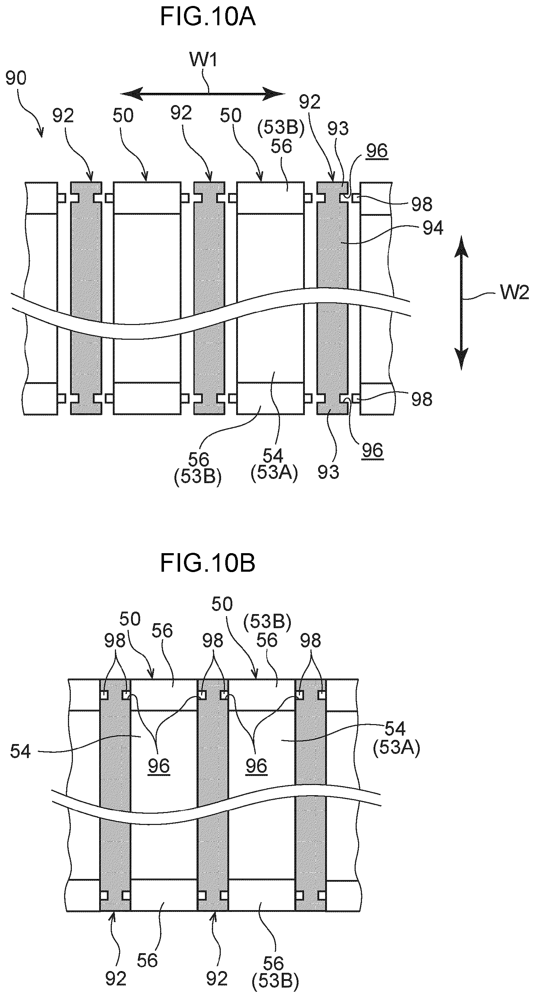

Below, a battery stack 90 according to a third variant example is described with reference to Fig. 10A and Fig. 10B. Fig. 10A is a plan view showing a partial magnification of a state prior to stacking of the battery cells 50 with inter-cell members 92 in the first direction W1. Fig. 10B is a plan view showing a partial magnification of a state subsequent to the stacking of the battery cells 50 and the inter-cell members 92.

As shown in Fig. 10A, each inter-cell member 92 includes, between the battery cells 50 that are adjacent, first regions 93 that touch the cap portions 56 (the high-stiffness regions 53B) and a second region 94 that touches the case portion 54 (the low-stiffness region 53A). The third variant example has a structure in which recess portions 96 are formed in the first regions 93 of the inter-cell member 92, and protrusion portions 98 that are provided at the cap portions 56 of the battery cells 50 are engaged with the recess portions 96. Thus, the first regions 93 of the inter-cell members 92 are engaged with the cap portions 56 of the battery cells 50.

The recess portions 96 are provided in faces at both sides of the first regions 93 in the first direction W1, and are formed as holes or slots invaginated in the first direction W1. The protrusion portions 98 are provided at faces at both sides of the cap portions 56 in the first direction W1, and are formed as rod-shaped or linear protrusions that protrude in the first direction W1.

According to the structure described above, the first regions 93 of the inter-cell members 92 touching the cap portions 56 (the high-stiffness regions 53B) are engaged with the cap portions 56. Therefore, bracing forces on the cap portions 56 from the inter-cell members 92 are relatively increased, and deformation of the battery cells 50 may be suppressed effectively.

In this structure, the recess portions 96 are provided at the first regions 93 of the inter-cell members 92 and the protrusion portions 98 are provided at the cap portions 56 of the battery cells 50, but these may be reversed. That is, a structure is applicable in which the protrusion portions 98 are provided at the first regions 93 of the inter-cell members 92 and the recess portions 96 are provided at the cap portions 56 of the battery cell 50.

- Fourth Variant Example -

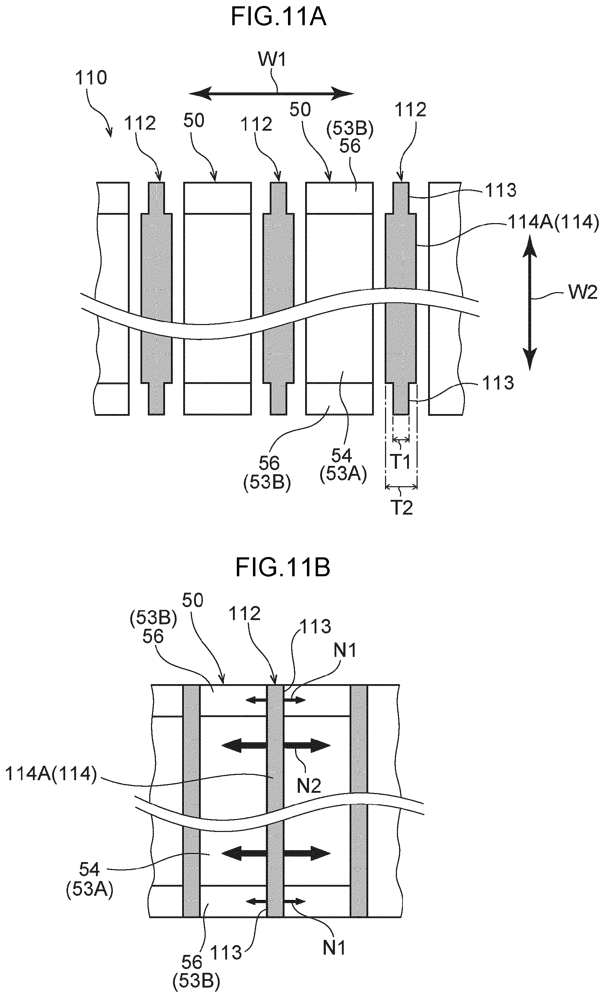

Below, a battery stack 110 according to a fourth variant example is described with reference to Fig. 11A and Fig. 11B. Fig. 11A is a plan view showing a partial magnification of a state prior to stacking of the battery cells 50 with inter-cell members 112 in the first direction W1. Fig. 11B is a plan view showing a partial magnification of a state subsequent to the stacking of the battery cells 50 and the inter-cell members 112.

In the fourth variant example, in contrast to the first to third variant examples, each inter-cell member 112 has a structure in which a friction force between the case portion 54 (the low-stiffness region 53A) of each battery cell 50 and a second region 114 is greater than friction forces between the cap portions 56 (the high-stiffness regions 53B) and first regions 113.

As shown in Fig. 11A, each inter-cell member 112 includes, between the battery cells 50 that are adjacent, the first regions 113 that touch the cap portions 56 and the second region 114 that touches the case portion 54. As an example in the fourth variant example, protruding portions 114A are provided at the second region 114 of the inter-cell member 112. The protruding portions 114A protrude to both sides in the first direction W1 relative to the first regions 113 that touch the cap portions 56 of the battery cells 50. Thus, a structure is formed in which thicknesses of the inter-cell member 112 in the first direction W1 are specified such that a thickness T2 of the second region 114 is greater than thicknesses T1 of the first regions 113. Other structures are similar to the structures of the first exemplary embodiment described above.

According to the structure of the fourth variant example, the cap portions 56 with high stiffness are restrained by the first regions 113 of the inter-cell members 112. Therefore, similarly to the exemplary embodiment described above, deformation of the battery cells 50 may be suppressed.

When the battery cells 50 and the inter-cell members 112 are being restrained in the first direction W1 and stacked, the case portion 54 (low-stiffness region 53A) of each exterior member 53 touches the corresponding inter-cell member 112 in advance of the cap portions 56 (the high-stiffness regions 53B). Therefore, a normal force N2 acting on each contact surface of the second region 114 is relatively higher than a normal force N1 acting on each contact surface of the first regions 113. Thus, a friction force operating at the contact region between the case portion 54 of the battery cell 50 and the second region 114 of the inter-cell member 112 is greater than a friction force at the contact region between the cap portion 56 and the first region 113. In this state, a restraint pressure operating on the case portion 54 of the battery cell 50 may be relatively increased. Consequently, shifting of the cap portions 56 may be suppressed while the electrode body 52 accommodated in the case portion 54 is restrained with sufficient restraint pressure.

In the present variant example, the inter-cell member 112 is constituted as a resilient body. Consequently, as illustrated in Fig. 11B, each protruding portion 114A of the second region 114 is resiliently deformed and crushed by the restraint pressure at the time of stacking. Thus, dimensional tolerances of the battery cells 50 and the inter-cell members 112 may be absorbed. In addition, restraint pressures caused by thermal expansion and contraction of the battery cells 50 and the like may be reduced. However, the inter-cell members 112 of the fourth variant example are not necessarily constituted as resilient bodies.

- Fifth Variant Example -

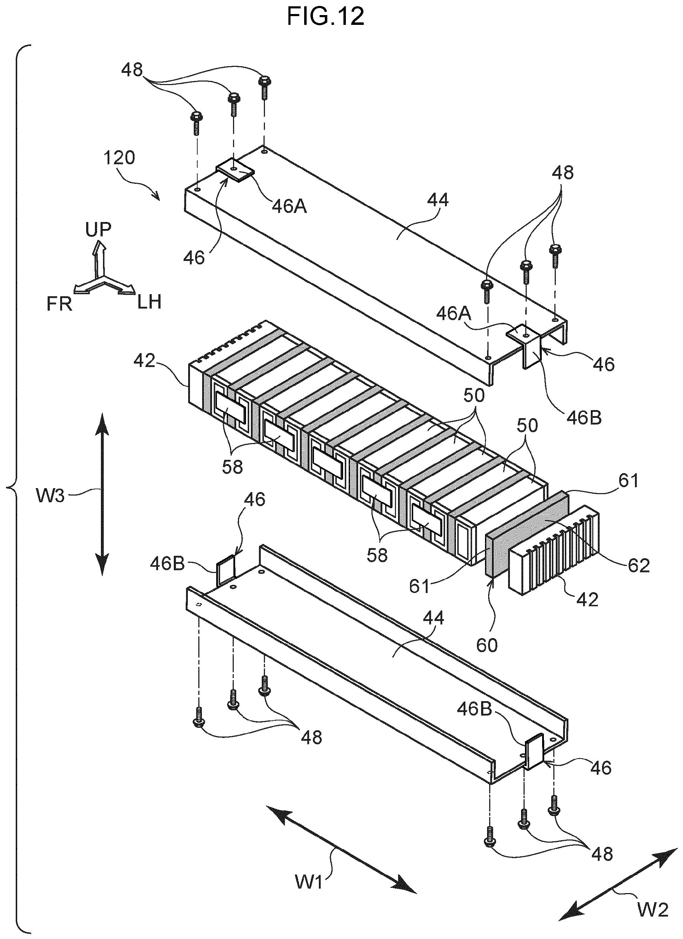

Below, a battery stack 120 according to a fifth variant example is described with reference to Fig. 12. Fig. 12 is an exploded perspective view in which the battery stack 120 is partially exploded.

In the battery stack 40 according to the first exemplary embodiment, the side plates 44 are disposed as a pair at the one side and the other side in the second direction that is orthogonal to the first direction W1. However, it is sufficient if the side plate 44 is disposed at least at one side in the direction orthogonal to the first direction W1. Therefore, in the first exemplary embodiment described above, the side plate 44 may be disposed at only one side in the second direction.

As in the fifth variant example shown in Fig. 12, the side plates 44 may also be arranged in a third direction W3 that is orthogonal to the first direction W1 and the second direction W2. That is, in the battery stack 120, the side plates 44 are disposed at one side and the other side in the third direction W3 so as to cover the upper face and lower face of the stack body in which the battery cells 50, the inter-cell members 60 and the pair of end plates 42 are stacked. In this structure too, one of the pair of side plates 44 may be omitted.

= Second Exemplary Embodiment =

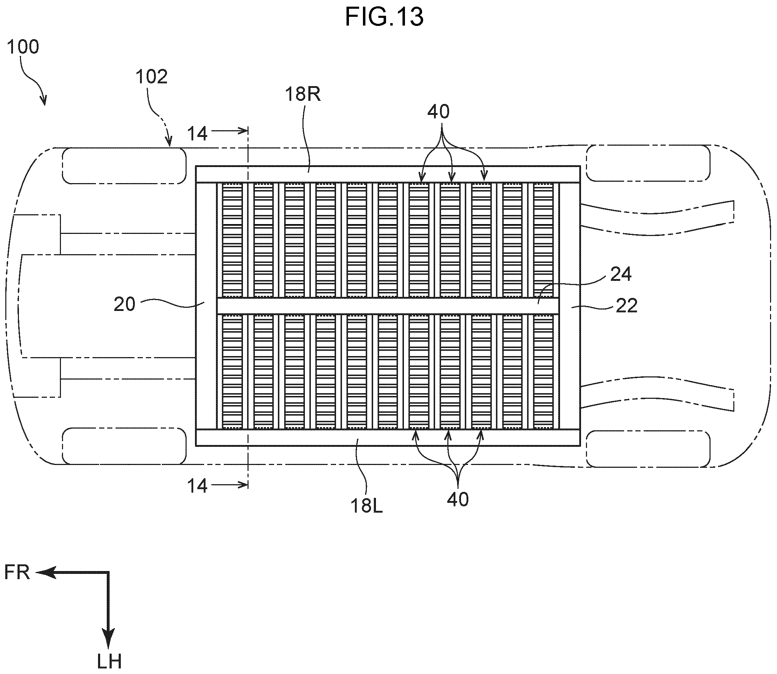

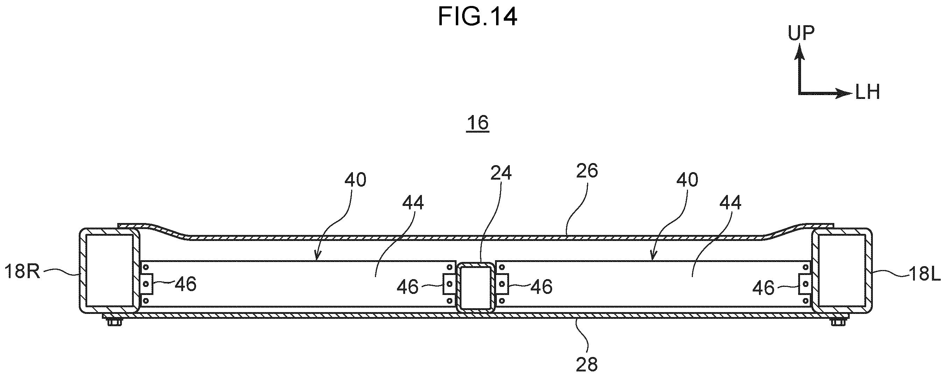

Below, a vehicle 100 in which the battery stacks 40 according to a second exemplary embodiment are mounted is described with reference to Fig. 13 and Fig. 14. Structural portions that are the same as in the first exemplary embodiment described above are assigned the same reference symbols and descriptions thereof are not given.

The vehicle 100 is an electric car that runs using driving force of an electric motor, which is not shown in the drawings, and is provided with a vehicle body 102. A plural number of the battery stack 40 that supply electric power for driving to the electric motor are mounted at a lower portion of the vehicle 100. The plural battery stacks 40 are fixed to the left and right rockers 18L and 18R and a center tunnel 24, which structure a framework of the vehicle, via the brackets 46. That is, the vehicle 100 is a vehicle with a Cell to Body (CTB) structure in which battery stacks are modularized and assembled with a body framework.

To describe this more specifically, the vehicle body 102 is equipped with the left and right pair of rockers 18L and 18R that extend in the vehicle front-and-rear direction at lower portions of both vehicle width direction sides of the vehicle cabin (not shown in the drawings), the front cross member 20 that spans in the vehicle width direction between the front end portions of the left and right rockers 18L and 18R, and the rear cross member 22 that spans in the vehicle width direction between the rear end portions of the left and right rockers 18L and 18R. The vehicle body 102 is also equipped with the center tunnel 24, which extends in the vehicle front-and-rear direction at a central portion in the vehicle width direction between the left and right rockers 18L and 18R, spanning between the front cross member 20 and the rear cross member 22.

The left and right pair of rockers 18L and 18R and the center tunnel 24 are equivalent to "a pair of framework portions --- disposed side by side in the first direction and extending in the second direction [that is orthogonal to the first direction]".

The vehicle body 102 is further equipped with the floor pan 26, which spans between the upper portions of the left and right rockers 18L and 18R and forms the floor of the vehicle cabin, and a floor plate 28, which spans between lower portions (lower end portions) of the left and right rockers 18L and 18R and forms a lower face of the vehicle body 102.

Similarly to the floor pan 26, the floor plate 28 is fabricated by press-forming of a plate material formed of a light metal, for example, an aluminium alloy or the like. The floor plate 28 is formed in a board shape with a plate thickness direction in the vehicle vertical direction.

- Vehicle mounting structure -

In the vehicle 100, respective plural numbers of the battery stacks 40 are mounted (disposed) side by side in the vehicle front-and-rear direction between the rocker 18L at the left side and the center tunnel 24 and between the rocker 18R at the right side and the center tunnel 24. Upper sides of the plural battery stacks 40 are covered by the floor pan 26, and lower sides of the plural battery stacks 40 are covered by the floor plate 28. In the descriptions below, the rocker 18L at the left side and the rocker 18R at the right side may be referred to simply as the rockers 18.

The battery stacks 40 are accommodated between the rockers 18 and the center tunnel 24, and are fixed to the rockers 18 and the center tunnel 24 via the brackets 46, which serve as the other members.

In more detail, at each battery stack 40, the first main faces 46A of the brackets 46 are fixed at both end portions in the direction in which the rockers 18 and the center tunnel 24 are arrayed (that is, both end portions in the first direction W1 of the battery stack 40). In the present exemplary embodiment, the first main faces 46A of the brackets 46 are fixed to both end portions in the first direction W3 of the pair of side plates 44. The second main faces 46B of the brackets 46 are fixed to side faces of the opposing rocker 18 and center tunnel 24. The second main faces 46B are disposed between the side faces of the rocker 18 and center tunnel 24 and the pair of end plates 42 of the battery stack 40.

The pair of end plates 42 of each battery stack 40 may abut against the rocker 18 and the center tunnel 24, but preferably do not abut. When there is no abutting, the battery stacks 40 are restrained at the vehicle body 102 without abutting against the rockers 18 and the center tunnel 24. Hence, when an external force is applied to the lower portion of the vehicle body 102 of the vehicle 100 in the vehicle width direction (that is, the second direction W2 of the battery stacks 40), shocks transmitted to the battery stacks 40 via the rockers 18 may be moderated. Moreover, transmission of vibrations of the vehicle body 102 to the battery stacks 40 during running may be suppressed.

In the vehicle mounting structure described above, the battery stacks 40 are a framework of the vehicle lower portion and are fixed to the vehicle 100 via two framework portions (the rocker 18 and the center tunnel 24) that are adjacent in the first direction W1 and the brackets 46. Thus, the vehicle mounting structure according to the present exemplary embodiment may be employed in a vehicle with a CTB structure in which battery stacks are modularized and assembled with the body framework. Therefore, deformation of the battery cells 50 in the vehicle 100 with a CTB structure may be suppressed.

In the vehicle mounting structure described above, the center tunnel 24 may be omitted, in which case the battery stacks 40 are accommodated between the rocker 18 at the left side and the rocker 18 at the right side, and are fixed to the rockers 18 via the brackets 46 serving as the other members.

In the vehicle mounting structure described above, the battery stacks 40 are not necessarily fixed to the vehicle body 102 via the brackets 46; the brackets 46 may be omitted. When the brackets 46 are omitted, brackets may be formed integrally with the pairs of end plates 42 or the pairs of side plates 44.

In the exemplary embodiments and variant examples described above, the battery cells 50 are solid state batteries, but the present disclosure is not limited thus. The battery cells may be liquid-based batteries, in which case electrolyte layers of the electrode bodies are structured with liquid electrolyte and separators.

It will be clear that the structures of the variant examples described above are applicable to the vehicle 100 according to the second exemplary embodiment. Further, the structures of the exemplary embodiments and variant examples described above may be combined and substituted within a scope not departing from the gist of the disclosure.

## Claims

1. A battery stack (40, 70, 80, 90, 110, 120) comprising:

   a plurality of battery cells (50) disposed side by side in a first direction (W1), an electrode body (52) being accommodated in an exterior member (53) of each of the battery cells (50); and
   at least one inter-cell member (60, 72, 82, 92, 112) disposed between adjacent battery cells (50),
   wherein the exterior member (53) includes:

   a low-stiffness region (53A) that is superposed with the electrode body (52) in the first direction (W1); and
   a high-stiffness region (53B) that is higher in stiffness than the low-stiffness region (53A), the high-stiffness region (53B) being provided at a side of the low-stiffness region (53A) at which an end portion of the exterior member (53) in a second direction (W2) is disposed, the second direction (W2) intersecting the first direction (W1), and

   wherein the inter-cell member (60, 72, 82, 92, 112) includes:

   a first region (61, 73, 83, 93, 113) that touches the high-stiffness region (53B); and
   a second region (62, 74, 84, 94, 114) that touches the low-stiffness region (53A).

2. The battery stack (40, 70, 80, 90, 110, 120) according to claim 1, wherein the low-stiffness region (53A) is formed of a laminate film.

3. The battery stack (40, 70, 80, 90, 110, 120) according to claim 1 or claim 2, wherein a friction force between the high-stiffness region (53B) and the first region (61, 73, 83, 93, 113) is greater than a friction force between the low-stiffness region (53A) and the second region (62, 74, 84, 94, 114).

4. The battery stack (40, 70, 80, 90, 110, 120) according to claim 3, wherein coefficients of friction of the inter-cell member (60, 72, 82, 92, 112) are set such that a coefficient of friction of the first region (61, 73, 83, 93, 113) is greater than a coefficient of friction of the second region (62, 74, 84, 94, 114).

5. The battery stack (40, 70, 80, 90, 110, 120) according to claim 3, wherein thicknesses in the first direction (W1) of the inter-cell member (60, 72, 82, 92, 112) are set such that a thickness of the first region (61, 73, 83, 93, 113) is greater than a thickness of the second region (62, 74, 84, 94, 114).

6. The battery stack (40, 70, 80, 90, 110, 120) according to claim 3, wherein Young's moduluses of the inter-cell member are set such that a Young's modulus of the first region (61, 73, 83, 93, 113) is greater than a Young's modulus of the second region (62, 74, 84, 94, 114).

7. The battery stack (40, 70, 80, 90, 110, 120) according to claim 1 or claim 2, wherein the first region (61, 73, 83, 93, 113) of the inter-cell member (60, 72, 82, 92, 112) engages with the high-stiffness region (53B).

8. The battery stack (40, 70, 80, 90, 110, 120) according to claim 1 or claim 2, wherein the inter-cell member (60, 72, 82, 92, 112) is a thermally insulating member.

9. The battery stack (40, 70, 80, 90, 110, 120) according to claim 1 or claim 2, wherein the inter-cell member (60, 72, 82, 92, 112) includes a pair of high-stiffness regions (53B), the high-stiffness regions (53B) opposing one another in the second direction (W2) intersecting the first direction (W1).

10. The battery stack (40, 70, 80, 90, 110, 120) according to claim 9, wherein the pair of high-stiffness regions (53B) have electrical conductivity.

11. The battery stack (40, 70, 80, 90, 110, 120) according to claim 1 or claim 2, further comprising a pair of end plate portions (42) that are disposed at an end portion at one side of the battery stack in the first direction (W1) and an end portion at another side of the battery stack in the first direction (W1).

12. The battery stack (40, 70, 80, 90, 110, 120) according to claim 11, further comprising a side plate portion (44) disposed at least at one end portion of the battery stack (40, 70, 80, 90, 110, 120) in a direction orthogonal to the first direction (W1), the side plate portion linking the pair of end plate portions (42) in the first direction (W1).

13. The battery stack (40, 70, 80, 90, 110, 120) according to claim 1 or claim 2, wherein the electrode body (52) includes a solid-state electrolyte.

14. A rechargeable battery apparatus (30) comprising:

    the battery stack (40, 70, 80, 90, 110, 120) according to claim 1;
    at least two longitudinal wall portions (36A, 36B, 36C) that are disposed side by side in the first direction (W1) and extend in the second direction (W2); and
    a battery case (32) between adjacent longitudinal wall portions (36A, 36B, 36C), the battery case (32) accommodating the battery stack (40, 70, 80, 90, 110, 120),
    wherein an end portion of the battery stack (40, 70, 80, 90, 110, 120) at one side in the first direction (W1) and an end portion of the battery stack (40, 70, 80, 90, 110, 120) at another side in the first direction (W1) are fixed to the longitudinal wall portions (36A, 36B, 36C) directly or via other members.

15. A vehicle mounting structure for the battery stack (40, 70, 80, 90, 110, 120) according to claim 1,

    the vehicle mounting structure comprising a pair of framework portions (18L, 18R) that structure a framework of a vehicle lower portion, the framework portions (18L, 18R) being disposed side by side in the first direction (W1) and extending in the second direction (W2),
    wherein an end portion of the battery stack (40, 70, 80, 90, 110, 120) at one side in the first direction (W1) and an end portion of the battery stack (40, 70, 80, 90, 110, 120) at another side in the first direction (W1) are fixed to the framework portions (18L, 18R) directly or via other members.

FIG.1

FIG.2

EP 4 668 390 A1

# FIG.3

FIG.4

# FIG.5

## FIG.6A

## FIG.6B

## FIG.7A

## FIG.7B

# FIG.8A

# FIG.8B

# FIG.9A

# FIG.9B

## FIG.10A

## FIG.10B

# FIG.11A

# FIG.11B

# FIG.12

## FIG.13

EP 4 668 390 A1

FIG.14

# FIG.15

## EUROPEAN SEARCH REPORT

Application Number

EP 25 17 5308

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/335826 A1 (KRITZER PETER [DE] ET AL) 19 October 2023 (2023-10-19) <br><br> * paragraphs [0049], [0062] - [64;77]; figures 1,3,17-21 * <br>----- | 1-6, 8-10, 13-15 | INV. <br> H01M10/04 <br> H01M50/124 <br> H01M50/209 <br> H01M50/211 <br> H01M50/242 |
| X | EP 3 208 866 A1 (ACCUMULATEURS FIXES [FR]) 23 August 2017 (2017-08-23) <br> * paragraphs [0008], [0029]; figures 1a-2b, 3a, 5 * <br>----- | 1,7-11, 13-15 | H01M50/249 <br> H01M50/262 <br> H01M50/291 |
| A | US 2023/178862 A1 (FUJISAKI SADAO [JP]) 8 June 2023 (2023-06-08) * the whole document * <br>----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 26 September 2025 | Monti, Adriano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 5308

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2025

| Patent document cited in search report | | | Publication date | Patent family member(s) | | | Publication date |
|---|---|---|---|---|---|---|---|
| US | 2023335826 | A1 | 19-10-2023 | CN | 116315412 | A | 23-06-2023 |
| | | | | DE | 102021132072 | A1 | 07-06-2023 |
| | | | | EP | 4191753 | A1 | 07-06-2023 |
| | | | | JP | 7560526 | B2 | 02-10-2024 |
| | | | | JP | 2023084120 | A | 16-06-2023 |
| | | | | KR | 20230085077 | A | 13-06-2023 |
| | | | | US | 2023335826 | A1 | 19-10-2023 |
| EP | 3208866 | A1 | 23-08-2017 | EP | 3208866 | A1 | 23-08-2017 |
| | | | | FR | 3048129 | A1 | 25-08-2017 |
| | | | | US | 2017244088 | A1 | 24-08-2017 |
| US | 2023178862 | A1 | 08-06-2023 | CN | 116315330 | A | 23-06-2023 |
| | | | | EP | 4191759 | A1 | 07-06-2023 |
| | | | | JP | 2025063328 | A | 15-04-2025 |
| | | | | KR | 20230085070 | A | 13-06-2023 |
| | | | | US | 2023178862 | A1 | 08-06-2023 |

EPO FORM P0459

For more details about this annex : see Official Journal of the European Patent Office, No. 12/82

**EP 4 668 390 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023084066 A